(19) Europäisches Patentamt
European Patent Office
Office européen des brevets

(11) Numéro de publication: **0 054 466**
**B1**

(12) **FASCICULE DE BREVET EUROPEEN**

(45) Date de publication du fascicule du brevet: **20.06.84**

(51) Int. Cl.³: **C 09 D 3/74**, C 08 L 29/14, C 03 C 27/06

(21) Numéro de dépôt: **81401908.9**

(22) Date de dépôt: **02.12.81**

(54) **Plastifiant pour polyvinylbutyral, application à la réalisation d'intercalaires pour vitrages feuilletés de sécurité et produits ainsi obtenus.**

(30) Priorité: **02.12.80 FR 8025535**

(43) Date de publication de la demande:
**23.06.82 Bulletin 82/25**

(45) Mention de la délivrance du brevet:
**20.06.84 Bulletin 84/25**

(84) Etats contractants désignés:
**AT BE CH DE FR GB IT LI LU NL SE**

(56) Documents cités:
**FR - A - 847 504**
**US - A - 4 230 771**

(73) Titulaire: **SAINT-GOBAIN VITRAGE**
**Les Miroirs 18, avenue d'Alsace**
**F-92400 Courbevoie (FR)**
(84) **BE CH FR GB IT LI LU NL SE AT**
(73) Titulaire: **VEGLA Vereinigte Glaswerke GmbH**
**Viktoria Allee 3-5**
**D-5100 Aachen (DE)**
(84) **DE**

(72) Inventeur: **Dages, Daniel**
**1, rue des Closeaux**
**F-78130 Les Mureaux (FR)**

(74) Mandataire: **Eudes, Marcel et al,**
**Saint-Gobain Recherche 39 Quai Lucien Lefranc**
**F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 054 466 B1

## Description

L'invention concerne un plastifiant pour polyvinylbutyral. L'invention concerne également la préparation du polyvinylbutyral plastifié à l'aide de ce plastifiant et son utilisation sous forme de feuille notamment comme intercalaire pour des vitrages feuilletés de sécurité.

Le polyvinylbutyral plastifié est largement utilisé comme couche intercalaire dans les vitrages feuilletés de véhicules à moteur ou encore dans le bâtiment. Ces vitrages feuilletés doivent présenter certaines propriétés, par exemple une bonne stabilité de la tranche, une bonne tenue à la chaleur et une bonne résistance au choc notamment à basse température. Ces propriétés indispensables sont directement liées à la couche intercalaire de polyvinylbutyral plastifié.

Ainsi, la stabilité de la tranche est liée à la compatibilité du plastifiant avec la résine de polyvinylbutyral (en abrégé PVB). L'incompatibilité la plus typique est l'exsudation du plastifiant dans le PVB plastifié entraînant un décollement des éléments.

On connaît d'après la publication de brevet européen 0 011 577 l'utilisation d'adipates mixtes d'alkyle et d'alkylaryle comme plastifiant pour PVB. De tels adipates répondent à la formule générale:

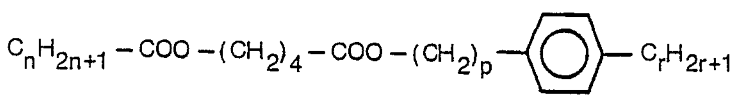

avec n supérieur ou égal à 1 et p + r supérieur ou égal à 1.

Des adipates mixtes convenables répondant à cette formule sont par exemple l'adipate de benzyle et d'octyle, l'adipate de benzyle et d'hexyle, l'adipate de benzyle et de butyle, l'adipate de benzyle et de décyle.

Les adipates mixtes susdits conviennent comme plastifiants pour une résine de PVB de masse moléculaire de 30 000 à 600 000 ayant une teneur de 0 à 10% en poids de groupements esters résiduels calculés comme acétate de polyvinyle, une teneur en hydroxyles de l'ordre de 12 à 25% en poids exprimée comme alcool polyvinylique. Les adipates mixtes ont une bonne compatibilité avec la résine de polyvinylbutyral. Les vitrages feuilletés préparés avec du polyvinylbutyral plastifié par ces adipates mixtes présentent de bonnes propriétés mécaniques, ont une stabilité de tranche excellente et une bonne résistance à la chaleur. Cependant, pour certaines applications, la tenue au froid et notamment la résistance aux chocs à froid est insuffisante.

On connaît aussi l'utilisation d'adipates de dialkyles, tels l'adipate de dibutyle, l'adipate de di-n-pentyle, l'adipate de di-n-hexyle, l'adipate de di-n-heptyle, l'adipate de di-n-octyle comme plastifiant du polyvinylbutyral. Mais ces plastifiants n'ont qu'une compatibilité partielle avec le PVB, d'autant plus faible que la masse moléculaire de l'adipate est plus grande, ou/et que la teneur en groupements hydroxyles de la résine devient plus élevée. Ceci oblige, soit à utiliser des résines à faible teneur en groupements hydroxyles, et par conséquent d'adhérence moins grande, soit des adipates de dialkyle de faible masse moléculaire, mais alors les propriétés de tenue des vitrages feuilletés à la chaleur ou la stabilité de tranche ne sont pas satisfaisantes.

On connaît encore, d'après le brevet US 2 229 222 l'utilisation en tant que plastifiant du PVB, de certains esters carboxyliques de glycol dont la chaîne carbonée de l'acide comprend au maximum 6 atomes de carbone, notamment le di-éthyl-2-butyrate de triéthylèneglycol, le di-n-hexanoate de diéthylèneglycol, le di-n-hexanoate de triéthylèneglycol, le di-méthyl-2-pentoate de triethylèneglycol, le di-éthyl-2-butyrate de diéthylèneglycol, le di-éthyl-2-butyrate de tétraéthylèneglycol, le di-éthyl-2-butyrate de pentaéthylèneglycol.

Ces plastifiants sont généralement bien compatibles avec le PVB, et procurent souvent un PVB plastifié présentant une bonne tenue à froid. Cependant, ce sont des produits chers, qui utilisés dans des proportions importantes, de l'ordre de 30% en poids par rapport à la résine de PVB, entraînent un coût élevé pour le produit final palstifié.

Bien que l'on connaisse d'après le brevet US 4 230 771 l'utilisation du di-n-heptanoate du tétraéthylèneglycol comme plastifiant du PVB, les autres diesters issus d'acides ayant une chaîne carbonée comprenant 7 ou plus atomes de carbone sont généralement peu ou pas compatibles avec le PVB.

L'invention obvie aux inconvénients cités. Sous un des aspects de l'invention on utilise comme plastifiant du PVB un mélange d'au moins un diester d'un acide carboxylique ayant une chaîne carbonée comprenant 7 ou 8 atomes de carbone et du triéthylèneglycol avec au moins un adipate choisi parmi les adipates de dialkyle dans lesquels le groupement alkyle contient de 3 à 8 atomes de carbone et les adipates mixtes d'alkyle et d'alkylaryle de formule générale:

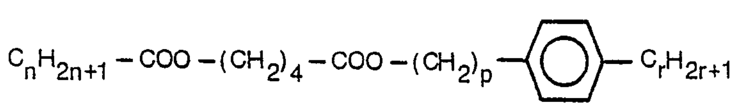

avec n supérieur ou égal à 1 et p + r supérieur égal à 1.

Ce plastifiant conduit à un polyvinylbutyral plastifié qui, employé sous forme d'une couche intercalaire dans un vitrage feuilleté, procure une bonne tenue à froid du vitrage notamment une résistance aux chocs élevée. Ce plastifiant, qui est d'un prix accessible, est particulièrement compatible avec la résine de PVB. Cette résine peut alors présenter un taux en hydroxyles assez élevé.

Les mélanges préférés du fait qu'ils utilisent des produits facilement synthétisables, ou courants, sont notamment les mélanges du di-n-heptanoate de triéthylèneglycol ou du di-éthyl-2-hexanoate de triéthylèneglycol ou du di-n-octanoate de triéthylèneglycol avec au moins un adipate d'alkyle et d'alkylaryle choisi parmi l'adipate de benzyle et d'octyle, l'adipate de benzyle et d'hexyle, l'adipate de benzyle et de butyle, l'adipate de benzyle et de décyle.

L'ajout d'adipates d'alkyle et d'alkylaryle permet notamment de réduire encore le coût du plastifiant sans pour autant diminuer sensiblement les propriétés mécaniques de l'intercalaire plastifié.

Sous un des aspects de l'invention, on prépare un polyvinylbutyral plastifié à l'aide d'un mélange de plastifiants pouvant comprendre de 10 à 90% environ d'un diester du triéthylèneglycol, comme décrit précédemment, le reste étant constitué d'au moins un adipate d'alkyle et d'alkylaryle.

Les résines de PVB pouvant être plastifiées selon l'invention ont une masse moléculaire de 30 000 à 600 000, une teneur de 0 à 10% en poids de groupements esters résiduels calculée comme acétate de polyvinyle, une teneur en hydroxyles de l'ordre de 12 à 25% en poids exprimée comme alcool polyvinylique.

De préférence, ces résines de polyvinylbutyral sont préparées comme il est dit dans la publication de brevet français FR 2 401 941 et leur teneur en groupements esters résiduels est inférieure à 5%.

Les exemples suivants illustrent les bons résultats obtenus en utilisant un mélange de plastifiants selon l'invention.

Les méthodes d'essais utilisées pour montrer les avantages de la présente invention sont décrites ci-après:

### Resistance aux chocs a differentes temperatures

Les échantillons de vitrages feuilletés utilisés pour ce test et les suivants sont préparés comme suit: la feuille de polyvinylbutyral plastifié de 0,76 mm d'épaisseur est préalablement conditionnée en humidité puis placée entre deux feuilles de verre planes carrées de 30,5 cm de côté et de 3 mm d'épaisseur. Ces échantillons sont alors comprimés sous une pression de 10 bars à 138°C pendant 20 minutes en autoclave. Ils sont ensuite divisés en trois groupes pour être conditionnés 24 heures à des températures bien déterminées (−20°C; −10°C; 20°C).

Un premier essai de résistance au choc est effectué avec une bille d'acier d'un poids de 2,260 kg que l'on fait tomber sur la partie centrale d'un échantillon reposant sur un cadre en bois. On détermine la hauteur approximative pour laquelle 90% des échantillons testés à la température choisie résistent à la chute de la bille sans être traversés.

Un autre essai de résistance au choc à froid est effectué avec une bille d'acier de 0,227 kg, de 38 mm de diamètre que l'on fait tomber d'une hauteur de 10 m sur un échantillon de verre feuilleté comme précédemment. On observe si les échantillons sont traversés ou non par le projectile et on mesure la masse de verre détachée après le choc. On note aussi si des déchirures ou des fentes ont été produites dans la couche intercalaire après l'impact. Un essai est considéré comme bon si d'une part, la masse de verre qui se détache du côté opposé à l'impact est inférieure à 25 g et si d'autre part, la bille ne traverse pas le feuilleté. La présence de fentes indique seulement une moins bonne tenue au choc à froid.

### Resistance a la chaleur

Les échantillons de vitrages feuilletés sont placés dans l'eau bouillante pendant 2 heures et sont examinés ensuite du point de vue de la formation de bulles. Les échantillons exempts de bulles sont alors remis dans l'eau bouillante pendant 4 heures et de nouveau examinés.

Les exemples suivants n'ont aucun caractère limitatif, ils visent seulement à illustrer l'utilisation du di-n-heptanoate de triéthylèneglycol ou du di-éthyl-2-hexanoate de triéthylèneglycol en mélange avec un adipate d'alkyle et d'alkylaryle pour plastifier les résines de polyvinylbutyral.

Les résines ont été préparées comme il est dit dans la publication de brevet française 2 401 941.

Le polyvinylbutyral plastifié est obtenu par mélange de la résine de PVB avec la plastifiant. La quantité de plastifiant peut varier en fonction des propriétés désirées du PVB plastifié. On utilise généralement le plastifiant dans des proportions telles que la teneur en plastifiant du PVB plastifié est comprise entre 10 et 65%.

Le mélange s'effectue d'après les méthodes classiques bien connues de l'homme de métier.

On peut par exemple placer la résine de PVB dans un mélangeur et ajouter la quantité déterminée de plastifiant, progressivement et sous agitation. Le mélange peut s'effectuer à température ordinaire et durant 30 minutes environ, mais aussi à des températures plus élevées. On peut ainsi utiliser la méthode décrite dans la publication de brevet française 2 235 163.

On peut encore utiliser les mélangeurs décrits dans l'article paru dans la revue "Les Techniques de l'Ingénieur" (référence J 1930).

Après mélange, on obtient une masse qu l'on peut extruder pour fabriquer des feuilles ayant par example une épaisseur de 0,76 mm. Ces feuilles sont utilisées comme couches intercalaires dans des vitrages feuilletés.

Exemples

Les exemples 1 à 4 illustrent les bonnes propriétés des feuilletés réalisés avec un intercalaire de PVB plastifié avec le plastifiant suivant l'invention.

Les exemples 5 à 8 sont utilisés comme témoins et concernent les feuilletés comprenant un intercalaire plastifié à l'aide de plastifiants connus de l'état de la technique.

L'ensemble des résultats est exprimé dans le tableau suivant et commenté par la suite.

Les abréviations ont la signification suivante:

— 3 GOE : di-n-heptanoate de triéthylèneglycol
— BOA : adipate de benzyle et d'octyle
— n DHA : adipate de di-n-hexyle
— 3 GH : di(éthyl-2-butyrate) de triéthylèneglycol
— 3 GO : di(éthyl-2-hexanoate) de triéthylèneglycol

| EX | nature plastifiant 1 | nature plastifiant 2 | rapport entre plastifiants 1/2 en % | total plast p.c.r. | taux OH % | bille 2,260 kg en pieds (0,325 m) −10°C | bille 2,260 kg en pieds (0,325 m) +20°C | petite bille (0,227 kg) bon −20°C | test à la chaleur | compatibilité |
|---|---|---|---|---|---|---|---|---|---|---|
| 1 | 3GOE | BOA | 20/80 | 40 | 18,5 | 11 | 20 | 6/6 | bon | oui |
| 2 | 3GOE | BOA | 50/50 | 38 | 18,5 | 14 | 22 | 6/6 | bon | oui |
| 3 | 3GOE | BOA | 75/25 | 38 | 18,5 | 17 | 20 | 6/6 | bon | oui |
| 4 | 3GO | BOA | 40/60 | 37 | 19,5 | 13 | 22 | 6/6 | bon | oui |
| 5 | | BOA | | 37 | 18,5 | 9 | 24 | 5/6 | bon | oui |
| 6 | | nDHA | | 37 | 18,5 | 8 | 25 | 5/6 | bon | oui |
| 7 | | 3GH | | 41 | 20 | 9 | 22 | 6/6 | bon | oui |
| 8 | 3GOE | | | 38 | 18,5 | 20 | 21 | 6/6 | bon | oui |

La première colonne du tableau indique le numéro de l'essai. Les seconde et troisième colonnes indiquent la nature des plastifiants ajoutés à la résine de PVB, la quatrième, le cas échéant, le rapport entre le ler et le 2ème plastifiant du mélange des plastifiants, la colonne n° 5 indique la teneur totale en plastifiant exprimée en parties pour cent de résine (en abrégé p.c.r.). La colonne 6 indique le taux d'OH de la résine de PVB, les colonnes 7 et 8 indiquent les résultats des tests de chute de billes de 2,260 kg, exprimés pour chaque exemple en pieds, la colonne 7 correspondant à des essais effectués à −10°C et la colonne 8 à +20°C. La colonne 9 indique le test à la petite bille à −20°C. La colonne 10 indique le résultat du test à la chaleur et la colonne 11 montre la compatibilité du plastifiant et de la résine de PVB. (Un pied vaut 30,5 cm).

Ce tableau montre par exemple que le di-n-heptanoate de triéthylèneglycol en mélange avec un adipate d'alkyle et d'alkylaryle donne un feuilleté qui présente une bonne résistance au choc aussi bien dans les conditions normales de température qu'à basse température. Cette résistance au choc est supérieure à celle obtenue en utilisant un plastifiant connu de l'état de la technique.

Tous les tests à la petite bille sont positifs lorsqu'on utilise un plastifiant conforme à l'invention, alors que des échantillons témoins sont traversés.

En outre, on remarque que l'intercalaire dans ce cas ne présente pas de déchirure après l'impact, contrairement à certains échantillons témoins.

Le tableau montre encore que le mélange du di-n-heptanoate de triéthylèneglycol avec un adipate d'alkyle et d'alkylaryle est bien compatible avec la résine PVB même pour des taux d'OH élevés.

**Revendications**

1. Plastifiant pour intercalaire en polyvinylbutyral utilisé dans un vitrage feuilleté, caractérisé en ce qu'il comprend un mélange d'au moins un diester d'un acide dicarboxylique dont la chaîne carbonée comprend 7 ou 8 atomes de carbone et du triéthylèneglycol avec au moins un adipate choisi parmi le groupe des adipates de dialkyle dans lesquels le groupement alkyle contient de 3 à 8 atomes de carbone, et des adipates d'alkyle et d'alkylaryle de formule générale:

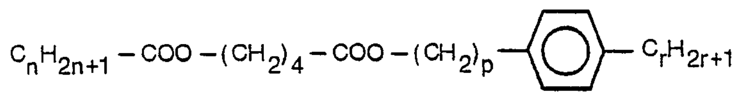

avec n supérieur ou égal à 1 et p + r supérieur ou égal à 1.

2. Plastifiant selon la revendication 1, caractérisé en ce que le mélange comprend de 10 à 90% de diester, le reste étant constitué par au moins un adipate d'alkyle et d'alkylaryle.

3. Plastifiant selon l'une des revendications 1 ou 2, caractérisé en ce que le diester est choisi parmi le di-n-heptanoate de triéthylèneglycol, le di(éthyl-2-hexanoate) de triéthylèneglycol, le di-n-octanoate de triéthylèneglycol.

4. Plastifiant selon l'une des revendications 1 à 3, caractérisé en ce que l'adipate d'alkyle et d'alkylaryle est choisi parmi l'adipate de benzyle et d'octyle, l'adipate de benzyle et d'hexyle, l'adipate de benzyle et de butyle, l'adipate de benzyle et de décyle.

5. Plastifiant selon une des revendications 3 ou 4, caractérisé en ce que le diester est le di-n-heptanoate de triéthylèneglycol et que l'adipate est l'adipate de benzyle et d'octyle.

6. Plastifiant selon une des revendications 3 ou 4, caractérisé en ce que le diester est le di(éthyl-2-hexanoate) de triéthylèneglycol et que l'adipate est l'adipate de benzyle et d'octyle.

7. Plastifiant selon une des revendications 3 ou 4, caractérisé en ce que le diester est le di-n-octanoate de triéthylèneglycol et que l'adipate est l'adipate de benzyle et d'octyle.

8. Polyvinylbutytal plastifié à l'aide du plastifiant selon une des revendications 1 à 7.

9. Polyvinylbutyral selon la revendication 8, caractérisé en ce que la teneur en plastifiant est comprise entre 10 et 65% du poids total du polyvinylbutyral.

10. Intercalaire pour un vitrage feuilleté de sécurité, caractérisé en ce qu'il comprend essentiellement un polyvinylbutyral plastifié selon une des revendications 8 ou 9.

11. Vitrage feuilleté de sécurité, notamment vitrage de véhicules de transport, de bâtiment, verre de lunettes, masques, écrans, lentilles, caractérisé en ce qu'il comprend un intercalaire selon la revendication 10.

**Patentansprüche**

1. Plastifizierungsmittel aus Polyvinylbutyral als Zwischenschicht bei einer Mehrschichtenverglasung, dadurch gekennzeichnet, daß es eine Mischung aus wenigstens einem Diester der Dicarbonsäure aufweist, wobei die Kohlenstoffkette sieben oder acht Kohlenstoffatome enthält und Triäthylenglykol mit wenigstens einem Adipat aus der Gruppe der Dialkyladipate enthält und die Alkylgruppe drei bis acht Kohlenstoffatome enthält und das Alkyl- und Alkylaryladipat folgende allgemeine Formel hat:

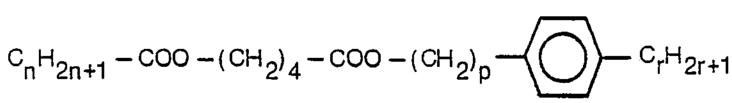

wobei n größer oder gleich 1 und p größer oder gleich 1 sind.

2. Plastifizierungsmittel nach Anspruch 1, dadurch gekennzeichnet, daß die Mischung 10 bis 90% Diester aufweist und der Rest aus wenigstens einem Alkyl und Alkylaryladipat besteht.

3. Plastifizierungsmittel nach einem der Anspruch 1 oder 2, dadurch gekennzeichnet, daß der Diester ein Di-n-heptanoat des Triäthylenglykols, ein Di(Äthyl-2-hexanoat) des Triäthylenglykols, oder das Di-n-octanoat des Triäthylenglykols ist.

4. Plastifizierungsmittel nach einem der Ansprüche 1 bis 3, dadurch gekennzeichnet, daß das Alkyl- und Alkylaryladipat das Benzyl- und Octyladipat, das Benzyl- und Hexyladipat, das Benzyl- und Butyladipat oder das Benzyl- und Decyladipat ist.

5. Plastifizierungsmittel nach Anspruch 3 oder 4, dadurch gekennzeichnet, daß der Diester das Di-n-heptanoat des Triäthylenglykols ist und das Adipat Benzyl- und Octyladipat ist.

6. Plastifizierungsmittel nach einem der Ansprüche 3 oder 4, dadurch gekennzeichnet, daß der Diester das Di(Athyl-2-hexanoat) des Triäthylenglykols und das Adipat das Benzyl- und Octyladipat ist.

7. Plastifizierungsmittel nach einem der Ansprüche 3 oder 4, dadurch gekennzeichnet, daß der Diester das Di-n-octanoat des Triäthylenglykols und das Adipat Benzyl- und Octyladipat ist.

8. Plastifiziertes Polyvinylbutyral hergestellt mit einem Plastifizierungsmittel nach einem der Ansprüche 1 bis 7.

9. Polyvinylbutyral nach Anspruch 8, dadurch gekennzeichnet, daß der Gehalt an Plastifizierungsmittel zwischen 10 und 65 Gew.-% des gesamten Polyvinylbutyrals beträgt.

10. Zwischenschicht für ein Mehrscheibensicherheitsglas, dadurch gekennzeichnet, daß sie im wesentlichen aus einem plastifizierten Polyvinylbutyral nach einem der Ansprüche 8 oder 9 besteht.

11. Mehrscheibensicherheitsglasscheibe, insbesondere für Transportfahrzeuge, Wasserfahrzeuge, Brillengläser, Masken, Bildschirme, Linsen, dadurch gekennzeichnet, daß sie eine Zwischenschicht nach Anspruch 10 aufweist.

**Claims**

1. Plasticiser for a polyvinylbutyral intermediate used in a laminated pane, characterised in that it comprises a mixture of at least one diester of a dicarboxylic acid of which the carbon chain comprises 7 to 8 carbon atoms and triethyleneglycol with at least one adipate selected from the group of dialkyl adipates in which the alkyl group contains from 3 to 8 carbon atoms and the alkyl alkylaryl adipates of general formula:

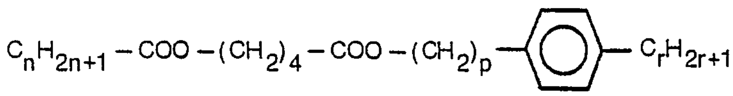

wherein n is equal to or greater than 1 and p + r is greater than or equal to 1.

2. Plasticiser according to claim 1, characterised in that the mixture comprises from 10 to 90% of diester, the remainder consisting of at least one alkyl alkylaryl adipate.

3. Plasticiser according to claim 1 or 2, characterised in that the diester is selected from triethyleneglycol di-n-heptanoate, triethyleneglycol di(ethyl-2-hexanoate) and triethyleneglycol di-n-octanoate.

4. Plasticiser according to one of claims 1 to 3, characterised in that the alkyl alkylaryl adipate is selected from benzyl octyl adipate, benzyl hexyl adipate, benzyl butyl adipate, and benzyl decyl adipate.

5. Plasticiser according to claim 3 or 4, characterised in that the diester is triethyleneglycol di-n-heptanoate and the adipate is benzyl octyl adipate.

6. Plasticiser according to claim 3 or 4, characterised in that the diester is triethyleneglycol di(ethyl-2-hexanoate) and the adipate is benzyl octyl adipate.

7. Plasticiser according to claim 3 or 4, characterised in that the diester is triethyleneglycol di-n-octanoate and the adipate is benzyl octyl adipate.

8. Polyvinylbutyral, plasticised by means of a plasticiser according to one of claims 1 to 7.

9. Polyvinylbutyral according to claim 8, characterised in that the content of plasticiser is from 10 to 65% of the total weight of the polyvinylbutyral.

10. Intermediate for a laminated safety pane, characterised in that it comprises essentially a plasticised polyvinylbutyral according to one of claims 8 and 9.

11. Laminated safety pane, especially a pane for transport vehicles, buildings, prescription lenses, masks, screens and lenses characterised in that it comprises an intermediate according to claim 10.